**Europäisches Patentamt**

**European Patent Office**

**Office européen des brevets**

(19)

(11) Veröffentlichungsnummer: **0 045 391**

**A2**

(12) # EUROPÄISCHE PATENTANMELDUNG

(21) Anmeldenummer: **81105328.9**

(22) Anmeldetag: **09.07.81**

(51) Int. Cl.³: **F 16 L 3/16**
**B 65 D 90/12**

(30) Priorität: **23.07.80 DE 3027874**
**10.01.81 EP 81100147**

(43) Veröffentlichungstag der Anmeldung:
**10.02.82 Patentblatt 82/6**

(84) Benannte Vertragsstaaten:
**AT BE CH DE FR GB IT LI NL SE**

(71) Anmelder: **Görgens, Erich**
**Wittelsbachstrasse 51**
**D-4000 Düsseldorf(DE)**

(72) Erfinder: **Görgens, Erich**
**Wittelsbachstrasse 51**
**D-4000 Düsseldorf(DE)**

(74) Vertreter: **Patentanwaltsbüro Cohausz & Florack**
**Postfach 14 01 47**
**D-4000 Düsseldorf 1(DE)**

(54) **Vorrichtung zum Halten von Teilen, wie Rohre oder Behälter, an Bauwerken.**

(57) Die Erfindung betrifft ein Tragwerk zum Halten von Teilen, wie Rohre oder Behälter, an Stützteilen, wie Bauwerke, Anlagen oder Fundamente, mit Lastübertragungsteilen, insbesondere Stäben (struts), die mit ihren an beiden Enden angeordneten Gelenken befestigt sind, wobei die Vorrichtung über äußere Stützlager an dem oder den Stützteil(en) und über innere Stützlager am zu haltenden Teil angelenkt ist.

Die Lastübertragungsteile 5, 6', 55, 57, 60 bilden eine geschlossene, starre, kinematische Gelenkkette, deren Glieder räumlich angeordnet sind und das zu haltende Teil 3, 3a in allen seinen Bewegungsrichtungen (Freiheitsgraden) festhalten.

Je zwei ein gemeinsames Gelenk 11 aufweisende Glieder bzw. Lastübertragungsteile fluchten mit ihren durch beide Gelenke verlaufenden Achsen nicht miteinander.

Die zwischen den Stützlagern A, B, A', B' befindlichen, die äußeren und/oder inneren Stützlager tragenden Stützteile 3', 6' bilden Glieder der Kette, wobei diese Stützteile 3', 6' die Kette starr machen.

Fig. 1

# COHAUSZ & FLORACK   **0045391**

PATENTANWALTSBÜRO

SCHUMANNSTR. 97 · D-4000 DÜSSELDORF

Telefon: (0211) 68 33 46          Telex: 0858 6513 cop d

---

PATENTANWALTE:

Dipl.-Ing. W. COHAUSZ · Dipl-Ing R. KNAUF · Dipl.-Ing. H. B. COHAUSZ · Dipl.-Ing. D. H. WERNER

---

Erich Görgens

Wittelsbachstr. 51

4000 Düsseldorf

## BEZEICHNUNG GEÄNDERT
### siehe Titelseite

Vorrichtung zum Halten von Teilen

Die Erfindung betrifft eine Vorrichtung, insbesondere
Tragwerk zum Halten von Teilen, wie Rohre, Behälter,
Wände, Decken, Bühnen, Träger, Maschinen, Bauwerke,
an Stützteilen, wie Bauwerken, Anlagen oder Fundamente,
insbesondere für die ein statischer und/oder dynamischer Lastfallnachweis erforderlich ist, mit Lastübertragungsteilen, insbesondere Stäben (struts), die
mit ihren an beiden Enden angeordneten Gelenken befestigt sind, wobei die Vorrichtung über äußere Stützlager an dem oder den Stützteil(en) und über innere
Stützlager am zu haltenden Teil angelenkt ist.

Es sind Stützvorrichtungen für Rohrleitungen bekannt,
die die Rohrleitung durch die Stäbe (struts) in mindestens eine der X-, Y- oder Z-Richtungen und in der
Drehrichtung der Rohrleitung um die Rohrachse halten.
Diese Rohrleitungsstützungen werden häufig in Kernkraftwerken verwendet und meistens durch einen Computer

35 162 EU/USA
HC/Be

berechnet. Dabei ist es eine unabdingbare Forderung,
daß die Rohrleitung neben den bauseitigen Anforderungen nur in der von der Computer-Stressberechnung
(Beanspruchungsberechnung) geforderten Richtung gestützt wird. Hierzu ist es bekannt, formschlüssige
Stahlkonstruktionen an jedem Stützpunkt der Rohrleitung anzuordnen, oder aber eine kraftschlüssige Verbindung mittels Rohrschellen zu schaffen, an denen
Stäbe (struts) angelenkt sind, die an beiden Enden
Gelenke aufweisen.

Diese für Konstruktion, Material und Berechnung sehr
aufwendigen Lösungen schaffen ein hohes Sicherheitsrisiko, da durch die kraftschlüssige Verbindung vom
Computer-Stressprogramm nicht erfaßbare zusätzliche
Bedingungen und Kräfte in den Unterstützungspunkt
einfließen können, was eine Zerstörung der Unterstützungskonstruktion und/oder der Rohrleitung zur
Folge haben kann.

Ferner bestehen folgende Nachteile:

- Bauseitig ist viel Freiraum erforderlich.

- Solche Konstruktionen sind sehr gefährdet durch
  Schwingungen in bestimmten Frequenzbereichen.

- Druckstöße und andere dynamische Kräfte werden bei
  einer Überbelastung der Stützung auf die Rohrleitung übertragen.

- Durch die Vielzahl der auftretenden Momente ist
  eine sehr große Bemessung der stützenden Bauteile
  erforderlich.

- Darüber hinaus ist die Absicherung gegen dynamische Kräfte sehr schwierig, da ihre Ermittlung und Bestimmung sehr komplex und unzuverlässig ist.

Beide Methoden, die formschlüssige Stahlkonstruktion wie die kraftschlüssige, starre Verbindung mittels Rohrschellen, zwängen der Rohrleitung durch das Vorhandensein von Kraft-, Last-, Biege- und Torsionsmomenten (insbesondere im dynamischen Bereich) hohe, die Sicherheit und Lebensdauer der Bauteile schädigende Belastungen auf. So werden Kriechvorgänge und Zeitstandverhalten in ihrer zerstörerischen Eigenschaft beschleunigt und verstärkt, was dann als Stützungsfehler nicht unbedingt am Stützungspunkt zum Schaden führen muß. Vielmehr wandern die Belastungsspitzen je nach Belastungsfall im Gesamt-System und zerstören Schwachstellen wie etwa Schweißstellen und andere Verbindungsstellen oder rufen Haarrisse an den Rohrleitungsbauteilen hervor. Ebenso sind alle Komponenten und Anschlüsse wie Pumpen etc. gefährdet, da die Nachteile dort aufaddiert auftreffen können.

Besonders die Momentbelastung bei der Kraft-/Last-Ableitung in Bauwerksteile ist sehr problematisch. So werden schwierige Nachweise von Wand-, Boden- und Deckenplatten erforderlich, da die Gefahr der Zerstörung einer Platten-Verankerung durch die Anschlußmomente sehr groß ist.

Um Schwingungen der zu stützenden Teile, z.B. durch ein Erdbeben erzeugt, zu verhindern, ist eine steife Halterung erforderlich. Hierdurch kann aber die Stützvorrichtung keine Verschiebungen aufnehmen, die im Bauwerk durch Katastrophen, wie Erdbeben, Explosionen oder Flugzeugabstürze, entstehen.

Der Erfindung liegt die Aufgabe zugrunde, mit dem geringst möglichen Aufwand an Berechnungs- und Konstruktionsarbeit und mit einem sehr hohen Sicherheitsgrad, insbesondere im Kernkraftwerksbau, Stützvorrichtungen der eingangs genannten Art zu schaffen, die die Bewegungen der zu stützenden Teile nur in der gewünschten Richtung begrenzen. Auch ist es Aufgabe der Erfindung, eine Stützvorrichtung zu schaffen, die eine hohe Steifigkeit aufweist und dennoch Bewegungen und Verschiebungen des Bauwerks, der Anlage und der zu stützenden Teile aufnehmen kann.

Diese Aufgabe wird erfindungsgemäß dadurch gelöst,

daß die Lastübertragungsteile eine geschlossene, starre, kinematische Gelenkkette bilden, deren Glieder räumlich angeordnet sind und das zu haltende Teil in allen seinen Bewegungsrichtungen (Freiheitsgraden) festhalten,

daß je zwei ein gemeinsames Gelenk aufweisende Glieder bzw. Lastübertragungsteile mit ihren durch beide Gelenke verlaufenden Achsen, insbesondere mit ihren Längsachsen, miteinander nicht fluchten, und

daß die zwischen den Stützlagern befindlichen, die äußeren und/oder inneren Stützlager tragenden Stützteile Glieder der Kette bilden, wobei diese Stützteile die Kette starr machen, und

daß eine Bewegung eines der Stützlager zu einer Bewegung mindestens eines Teiles der Kette führt.

Durch die erfindungsgemäße Lehre gelingt es, das zu haltende Teil unverschieblich durch die Lastübertragungsteile zu lagern, wobei die Konstruktion und meistens auch das zu haltende Teil ausweichen, wenn eines oder mehrere der äußeren Stützlager sich bewegt. Damit können u.a. Fundamentsenkungen, Erdbeben und Kräfte erzeugt durch Flugzeugabstürze aufgefangen werden, ohne daß das zu haltende Teil zerstört wird. Auch entstehen keine schädlichen Schwingungen des zu haltenden Teils. Darüber hinaus weichen auch die inneren Stützlager aus, wenn das zu haltende Teil sich dehnt oder schrumpft aufgrund von Temperaturänderungen.

Werden die Lastübertragungsteile, die eine Bewegungsrichtung abfangen, zueinander parallel angeordnet, so bewegt sich das zu haltende Teil nur achsparallel aufgrund der entstehenden Parallelverschiebung. Die Winkel der Körperachsen des zu haltenden Teils mit den Raumachsen bleiben gleich.

Sobald sich die Stützlager verschieben, steuern die Lastübertragungsteile das zu haltende Teil selbstregelnd (kybernetisch) in eine nicht zwängende Lage. Aber auch das zu haltende Teil gelangt bei einer Eigenbewegung, z.B. aufgrund einer thermischen Belastung, durch Ausweichen der Lastübertragungsteile in eine nicht zwängende Lage. Aufgrund dessen, daß die Kräfte nur über Gelenke übertragen werden, entstehen in den Lastübertragungsteilen nur Zug- und Druckkräfte.

Struts sind Bauelemente (etwa Rohre mit Gelenkenden), die für bestimmte Kraftübertragungsfälle konstruiert und statisch belegt sind. Diese Struts können gemäß der Erfindung aber auch durch andere, gleichwertige Bauelemente ersetzt werden. Die mit der Erfindung erzielten Vorteile bestehen insbesondere darin, daß eine vereinfachte Unterstützungsausführung, den bauseitigen Bedingungen angepaßt, das Sicherheitsrisiko bei der Berechnung, Konstruktion und im Betrieb, z.B. eines Kernkraftwerks, erheblich gegenüber dem Stand der Technik verringert. Bekannte und beherrschbare Berechnungsmethoden sind ausreichend, um alle Bedingungen und Kräfte in den Unterstützungselementen genau nachzuweisen, so daß eine Garantie für die Ausführung übernommen werden kann. Für die so überprüfbare Ausführung und Funktion können Arbeits-, Prüf- und Abnahmerichtlinien geschaffen werden. Damit ist das Sicherheitsrisiko insbesondere bei Kernkraftwerken in einem der gefährdetsten Punkte erheblich reduziert und wird bei richtiger Handhabung der Erfindung sogar vollkommen beherrscht.

Ein erster, wichtiger Festpunkt wird dadurch erreicht, daß mindestens zwei Lastübertragungsteile an einer einzigen Anlenkstelle des Rahmens oder eines Festpunktes um dieselbe Achse drehbar gelagert sind. Hierdurch wird ein Festpunkt geschaffen, der ein Verdrehen des Rahmens oder Rahmenteils in einer Ebene verhindert. Ohne einen solchen Festpunkt mit zwei Struts wird durch die Struts eine Gelenkkette gebildet, die es nicht ermöglicht, die Bewegungen des Rahmens oder Rahmenteils in allen Richtungen zu stoppen.

Es wird weitestgehend möglich sein, auf die aufwendigen Methoden nach dem Stand der Technik verzichtend
zu einer weitaus zuverlässigeren und einfacheren Absicherung der jeweiligen Lastfälle zu kommen, und
darüber hinaus sich selbstregelnde Lastfall- und/oder
verfahrensabhängig gesteuerte Systeme zu schaffen,
die eine optimale Material-, Anlagen- und Verfahrensausnutzung ermöglichen. Auch Randprobleme, wie die
häufig erhobene und sich gleichzeitig gegenseitig
ausschließende Forderung nach Flexibilität und Steifigkeit, werden so ebenso wie die Gleitreibung fast
gänzlich beseitigt.

Ein wesentlicher Bestandteil ist der Vorteil, daß an
allen wichtigen Anlagenkomponenten, wie z.B. Druckgefäßen und Pumpen, momentfreie und lastarme Anschlüsse ausgebildet werden können, auch wenn dort
eine ständige oder wechselnde Wärmeausdehnung stattfindet.

Die Rohr- und Behälterwände können sehr dünn sein,
da Dynamik nicht mehr aufgenommen werden muß.

Die Stützvorrichtung läßt ein Ausweichen der Einbauten und Teile zu und erzeugt dabei dennoch eine hohe
Steifigkeit. Vier, fünf, sechs oder mehr miteinander
verbundene Gelenkpunkte sind zueinander unbeweglich,
wobei eine Bewegung der Anlenkstellen am Gebäude
oder an der Anlage abgefangen wird und sich nicht
schädlich auf das gestützte Teil auswirkt.

Vorteilhafte Ausgestaltungen der Erfindung sind in den
Unteransprüchen aufgeführt.

Ausführungsbeispiele der Erfindung sind in den Zeichnungen schematisch dargestellt und werden im folgenden näher beschrieben. Es zeigen:

Fig. 1          eine Seitenansicht eines zwischen zwei
                Wänden gehaltenen Teils in einer ersten,
                nicht schraffiert gezeichneten Stellung
                und in einer zweiten, schraffiert dargestellten Stellung, in der die rechte Wand
                nach innen bewegt wurde;

Fig. 2          das Beispiel nach Fig. 1 in einer Draufsicht;

Fig. 3          eine Vorderansicht eines in einem Rahmen
                eines Gebäudes senkrecht stehenden Behälters oder Rohrabschnittes mit vier seitlichen Stützvorrichtungen mit je drei
                Stäben;

Fig. 4          einen Schnitt nach P-P in Fig. 3;

Fig. 5          eine Vorderansicht eines in einem Raum
                senkrecht stehenden Rohres mit drei Stützvorrichtungen mit je fünf Stäben;

Fig. 6          einen Schnitt nach Q-Q in Fig. 5;

Fig. 7          eine Vorderansicht eines in einem Raum
                senkrecht stehenden Rohres mit drei Stütz-
                vorrichtungen mit jeweils mehreren zuein-
                ander parallelen Stäben;

Fig. 8      einen Schnitt nach R-R in Fig. 7.

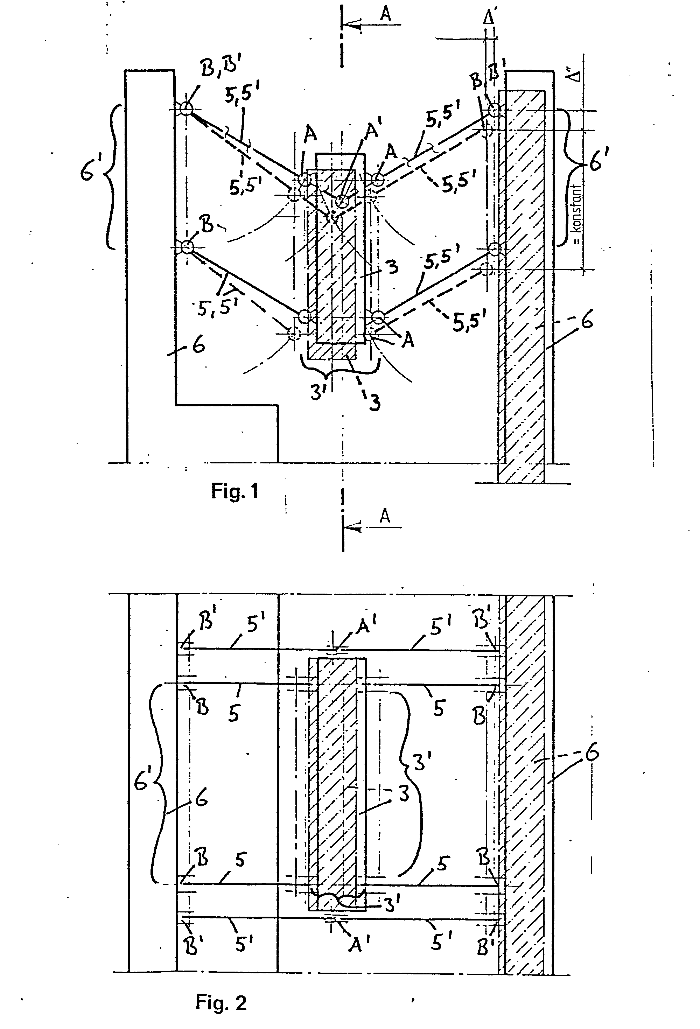

Die Lastübertragungsteile 5 sind in den Zeichnungen
nur schematisch in ihrer Kraftübertragungsrichtung
als Linie dargestellt und werden meistens von rohrförmigen Stäben (struts) gebildet, die an beiden Enden
je eine Gelenkhälfte (Gelenkteil) für ein Gelenk 11
tragen. In dem in den Figuren 1 und 2 dargestellten
Ausführungsbeispiel sind die Lastübertragungsteile 5
mit ihren inneren Enden an inneren Stützlagern A des
zu haltenden Teils 3 und mit ihren äußeren Enden an
äußeren Stützlagern B der Stützteile 6 angelenkt. Die
Stützteile 6 sind in diesem Ausführungsbeispiel senkrechte Betonwände eines Bauwerks. Die äußeren Stützlager B liegen höher als die inneren A, so daß bei
einem Verschieben des rechten Stützteils 6 schräg
nach innen und nach unten (schraffiert dargestellt)
das zu haltende Teil in gleicher Weise ausweicht, ohne
Kräfte aufnehmen zu müssen.

Auf beiden Seiten des zu haltenden Teils 3 sind oben
und unten je ein Paar zueinander parallele Lastübertragungsteile 5 angelenkt, so daß das Teil 3 sicher
in senkrechter Richtung und waagerechter Richtung
quer zur Längsachse gehalten ist. Für einen Halt des
Teils 3 in Längsrichtung ist mindestens ein weiteres,
nicht dargestelltes Lastübertragungsteil angelenkt.

Ferner sind auf jeder Seite noch je zwei zueinander
und zu den Teilen 5 parallele Lastübertragungsteile
5' angelenkt, deren inneres Stützlager A' ein gemeinsames Stützlager für die Lastübertragungsteile 5' beider Seiten bildet. Die Lastübertragungsteile 5'
sind damit länger als die übrigen, so daß bei einer
Bewegung der Wand 6 nach innen eine Zwängung entsteht,
wodurch eine Bewegung verzögert bzw. Beschleunigungsenergie minimiert wird. Insbesondere können hierdurch
auch Schwingungen des Teils 3 verhindert werden.

Die Lastübertragungsteile 5 bilden zu den Flächen der
Wände 6 von 90 Grad abweichende Winkel und fluchten
darüber hinaus nicht mit den hauptsächlich auftretenden Kraftrichtungen möglicher einwirkender Kräfte auf
die inneren und äußeren Stützlager bzw. auf die diese
Stützlager tragenden Abschnitte der Stützteile 6 und
des zu haltenden Teils 3. Darüber hinaus ist dafür
gesorgt, daß die auf einer Seite des zu haltenden
Teils angeordneten Lastübertragungsteile mit denen
der gegenüberliegenden Seite nicht fluchten. Die zwischen den Stützlagern A bzw. B befindlichen Abschnitte 3',6'
des Stützteils 6 bzw. des zu haltenden Teils 3 bilden
Glieder der gesamten kinematischen geschlossenen
Gelenkkette, die so lange starr ist, wie sich die
Stützteile 6 oder das zu haltende Teil nicht bewegen.
Dabei vermag das zu haltende Teil 3 nur dann eine Bewegung der Kette zu erzeugen, wenn eine Bewegung aufgrund einer Wärmedehnung oder -schrumpfung entsteht.

Ein auf einer Seite des zu haltenden Teils 3 angelenktes Lastübertragungsteil bildet einen Teil der Kette,
wobei dieses Kettenteil 7 auch aus mehreren Lastübertragungsteilen bestehen kann. Dabei kann jedes
Kettenteil 7 eine Bewegungsrichtung des zu haltenden
Teils stoppen, wobei das Kettenteil oder das Lastübertragungsteil nicht die kürzeste Verbindung zwischen dem zu haltenden Teil und dem äußeren Stützteil bilden darf, damit eine Bewegung des Stützteils oder des zu haltenden Teils nicht direkt übertragen wird, sondern zu einem Auslenken des zu haltenden Teils und der Lastübertragungsteile führt.

Die Gelenkkette, insbesondere die Kettenteile als auch die Lastübertragungsteile sind lang und/oder schräg genug zur einwirkenden Kraftrichtung, um einer größtmöglichen Bewegung eines oder mehrerer Stützlager folgen zu können. Die Kettenteile sind damit ausreichend zusammenschiebbar bzw. verkürzbar als auch bei einem Ausweichen des Stützteils nach außen ausreichend verlängerbar.

Alle in den Ausführungsbeispielen beschriebenen Teile sind Fertigteile, die je nach Anzahl der zu stoppenden Richtungen eingesetzt werden.

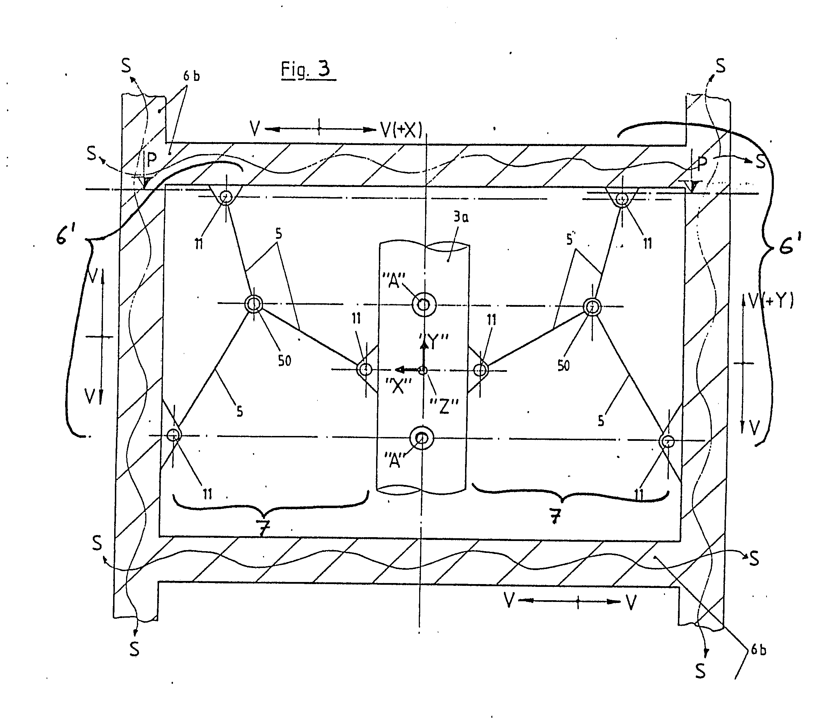

In den Ausführungsbeispielen nach den Figuren 3 bis 8 wird das zu stützende Teil 3a, das z.B. ein Rohr, ein Behälter, eine Wand, eine Decke, eine Bühne, ein Träger, eine Maschine oder eine sonstige Vorrichtung sein kann, durch Lastübertragungsteile 5, 55, 57, 60 gehalten, wobei keines dieser in sich starren Lastübertragungsteile mit seinen beiden Enden direkt zwischen dem Bauwerk oder der Anlage und dem zu unterstützenden Teil befestigt ist, sondern am einen oder anderen Ende ein weiteres Teil dazwischengeschaltet ist, so daß eines der beiden Enden des Lastübertragungsteils an einer weiteren Gelenkstelle 50, 52, 53, 54 oder 61 befestigt ist, die sich zwischen dem Bauwerk oder der Anlage und dem zu stützenden Teil befindet. Hierdurch besteht eine Gelenkkette, die Bewegungen des Bauwerks und/oder des zu stützenden Teils abfängt.

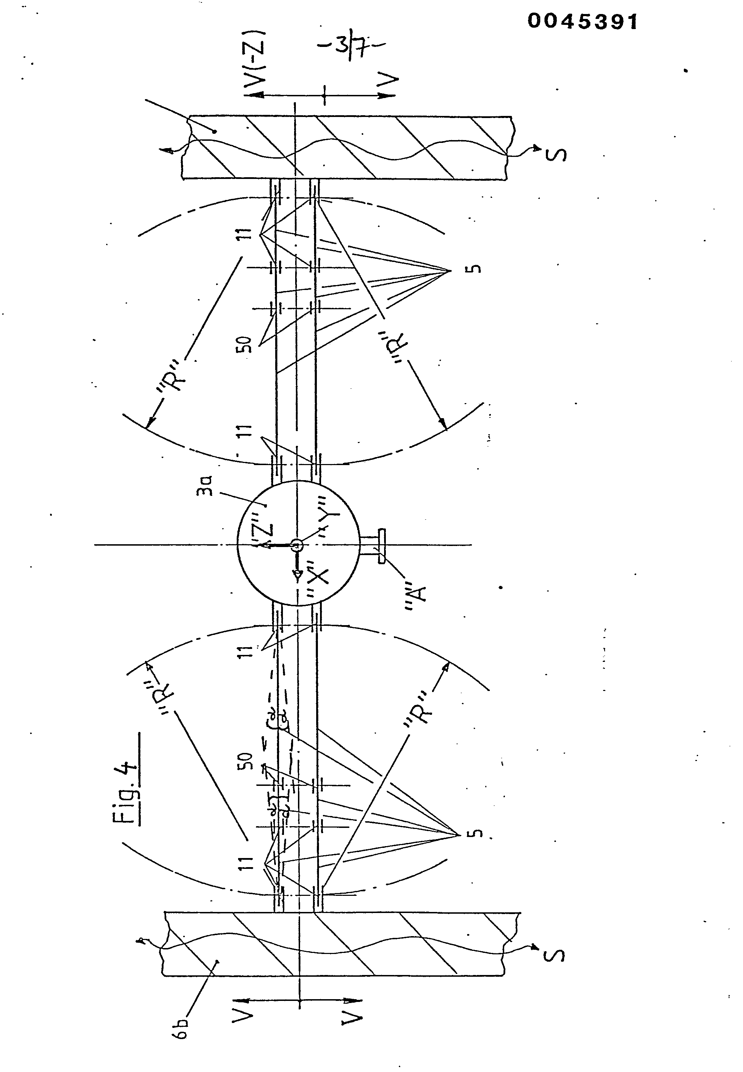

Das Ausführungsbeispiel nach Fig. 3 zeigt schematisch eine Vorderansicht eines Gebäudes in einem Ausschnitt, in dem ein Rohr oder Behälter 3a mit seiner Längsachse senkrecht durch vier Stützvorrichtungen befestigt ist. In Fig. 3 sind zwar nur zwei Stützvorrichtungen gezeigt, aber dahinter liegen zwei weitere parallele Stützvorrichtungen, wie aus Fig. 4 ersichtlich. Um eine sichere Befestigung des Teils 3a zu erhalten, müssen wenigstens zwei Stützvorrichtungen angeordnet sein, die zum Teil 3a einander gegenüberliegen. Jede dieser Stützvorrichtungen weist drei Lastübertragungsteile 5 auf, die aus Stäben (struts) oder starren Flächenelementen bestehen, die an beiden Enden Gelenke tragen und von denen zwei am Bauwerk und ein Lastübertragungsteil an der zu stützenden Vorrichtung in Gelenkstellen 11 angelenkt sind. Die drei übrigen freien Enden sind aneinander gelenkt in einer weiteren Gelenkstelle 50, die weder am Bauwerk bzw. an einer Anlage noch an dem zu stützenden Teil direkt befestigt ist, sondern zwischen dem Bauwerk bzw. der Anlage und dem zu stützenden Teil bzw. deren Gelenkstellen liegt. Die Lastübertragungsteile 5 und die Gelenkstellen 11, 50 liegen zumindest bei einer Stützvorrichtung, vorteilhafterweise aber auch bei zwei einander diametral gegenüberliegenden Stützvorrichtungen, in einer einzigen Ebene, in der auch die Hauptverschieberichtung des zu stützenden Teils liegt. Deshalb liegt auch die Längsachse des zu stützenden Teils in dieser Ebene, da
bei einem Rohr oder einem Behälter 3a die Hauptbewegungsrichtung aufgrund einer Wärmeausdehnung in Richtung der Längsachse liegt. Die Längsachsen bzw. die
Kraftübertragungsrichtungen der Lastübertragungsteile
5 stehen zueinander in einem Winkel von $<$ oder $>$ 180°,
d.h. sie fluchten nicht miteinander, so daß ein Druck
oder Zug in Richtung der Längsachse eines Lastübertragungsteils 5 zu einem Auslenken bzw. Verschwenken der
beiden anderen Lastübertragungsteile führt. Am Rohr
oder Behälter 3a sind Anschlüsse A angeordnet, an
denen weitere Rohrleitungen befestigt werden können.

Bei einer Verschiebung V in X-, Y- und/oder Z-Richtung aufgrund von Thermik oder Seismik S wird mindestens eine der am Bauwerk (oder einer Anlage) befestigten Gelenkstellen 11 bewegt. Eine Bewegung einer dieser äußeren Gelenkstellen 11 führt dazu, daß das
direkt mit dieser Gelenkstelle verbundene Lastübertragungsteil um die Gelenkstelle 50 verschwenkt wird,
so daß schon allein hierdurch ein Teil der Verschiebung aufgehoben wird. Ferner wird die Gelenkstelle 50
verschoben, wodurch wiederum die Gelenkstelle 50 bewegt wird und ein Verschwenken der beiden anderen Lastübertragungsteile 5 erzeugt. Hierdurch wird über das
am Teil 3a angelenkte Lastübertragungsteil das Teil
3a bewegt, da aber diese Bewegung erheblich geringer
ist als die ursprüngliche Bewegung des Bauwerks, und
ferner durch die gegenüberliegende zweite Stützvorrichtung teilweise abgefangen wird, wird eine Beschädigung des Teils 3a verhindert. Dabei ist von Bedeutung, daß aufgrund der klappsymmetrischen Anordnung der beiden Stützvorrichtungen zur Längsachse des zu stützenden Teils 3a auf das zu stützende Teil keine Momente ausgeübt werden, sondern das zu stützende Teil senkrecht bleibt und nur geringfügig parallel verschoben wird. Dabei kann zusätzlich eine Verschiebung des zu stützenden Teils in Längsrichtung erfolgen, wobei die Richtung dieser Verschiebung vorherbestimmbar ist, indem dafür gesorgt wird, daß die Gelenkstellen 50 höher oder niedriger als die am Teil 3a befestigte Gelenkstelle 11 ist. Liegt die Gelenkstelle 50 höher als diese Gelenkstelle 11, so wird das Teil 3a nach unten bewegt, und bei einer Anordnung der Gelenkstelle 50 niedriger als die am Teil 3a befestigte Gelenkstelle 11 wird das Teil 3a nach oben bewegt, wenn eine der am Gebäude befestigten Gelenkstellen raumeinwärts bewegt wird. Bei einer Bewegung raumauswärts sind die Richtungen umgekehrt.

Wie in Fig. 4 gezeigt, können die Gelenkstellen Pendellager sein, die ein Verschwenken quer zur eigentlichen Drehrichtung in einem Winkel von $\alpha$ zu beiden Seiten erlauben. Vorzugsweise wird $\alpha$ = 5$^{\circ}$ gewählt. Hierdurch wird ein Ausschwenken der Lastübertragungsteile und ein Bewegen des zu stützenden Teils 3a in Z-Richtung ermöglicht. Die doppelte Anordnung zweier zueinander paralleler Stützvorrichtungen auf jeder Seite des Teils 3a einander gegenüberliegend und mit den gegenüberliegenden fluchtend sorgt dafür, daß bei einer Bewegung des Teils 3a in Z-Richtung es seine parallele Lage beibehält. Die Stützvorrichtung bildet somit in zweifacher Weise eine Parallelführung. Die Gelenkstellen 11 können, wie in Fig. 3 unten längsgestrichelt gezeigt, in Langlöchern 11a der Stützteile einliegen, wodurch eine weitere Bewegungsmöglichkeit der Lastübertragungsteile und damit des zu stützenden Teils 3a erreicht wird.

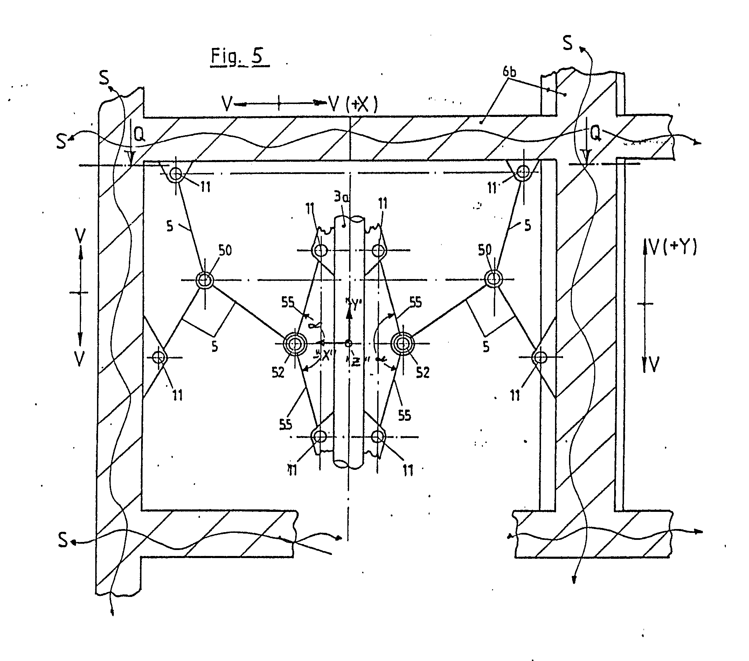

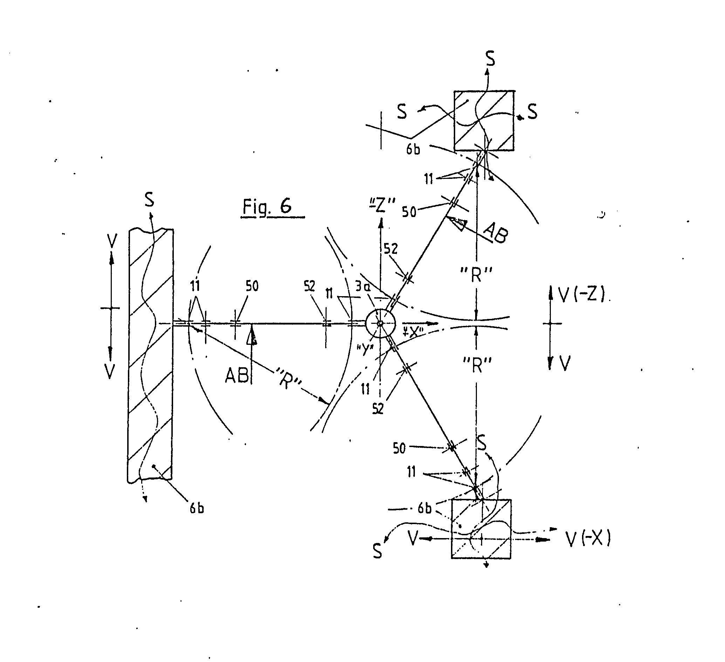

Das Ausführungsbeispiel nach Fig. 5 und 6 unterscheidet sich von dem nach den Figuren 3 und 4 im wesentlichen nur dadurch, daß das von der weiteren Gelenkstelle 50 ausgehende und zum Teil 3a führende Lastübertragungsteil 5 nicht direkt am Teil 3a angelenkt ist, sondern an einer zweiten weiteren Gelenkstelle 52, an der wiederum drei Lastübertragungsteile 5 angelenkt sind, von denen zwei Lastübertragungsteile 55 mit ihren anderen Enden am Teil 3a angelenkt sind. Die Teile 55 schließen auf der dem Teil 3a zugewandten Seite einen Winkel von $> 90^{\circ}$ und $< 180^{\circ}$ ein. Hierdurch liegt die weitere Gelenkstelle 52 zwischen den am Teil 3a angeordneten Gelenkstellen 11. Je nachdem, in welchem Abstand die Gelenkstelle 52 zu den beiden am Teil 3a angeordneten Gelenkstellen 11 liegt, führt eine Ausdehnung des Teiles 3a in Längsrichtung zu einer Bewegung dieses Teils nach unten oder oben. Damit ist eine Bewegung des Teils 3a aufgrund einer Wärmeausdehnung vorherbestimmbar. Wie in Fig. 6 zu sehen, sind an dem Teil 3a drei Stützvorrichtungen um die Längsachse des Teils 3a drehsymmetrisch angeordnet, wobei die Stützvorrichtungen jeweils mit der benachbarten einen Winkel von $120^{\circ}$ einschließen.

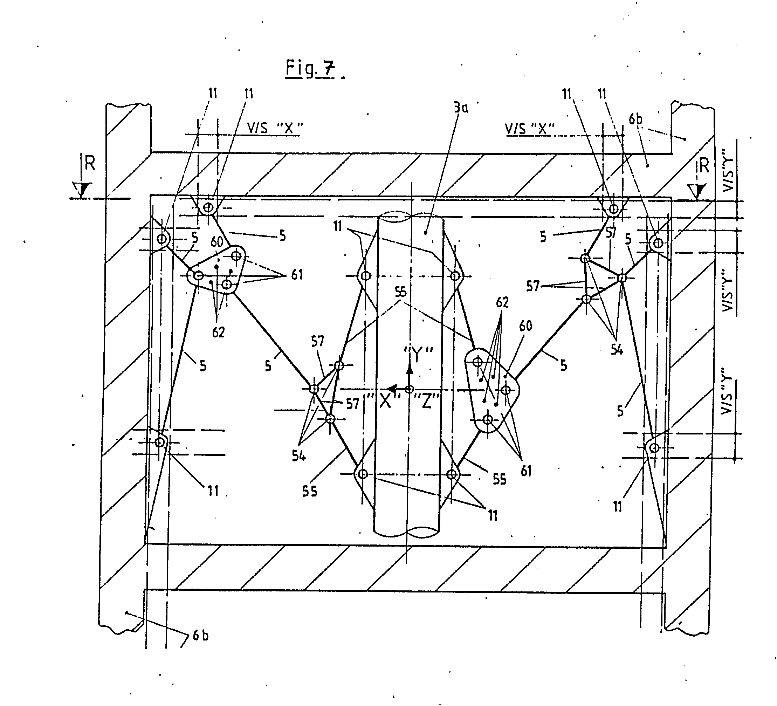

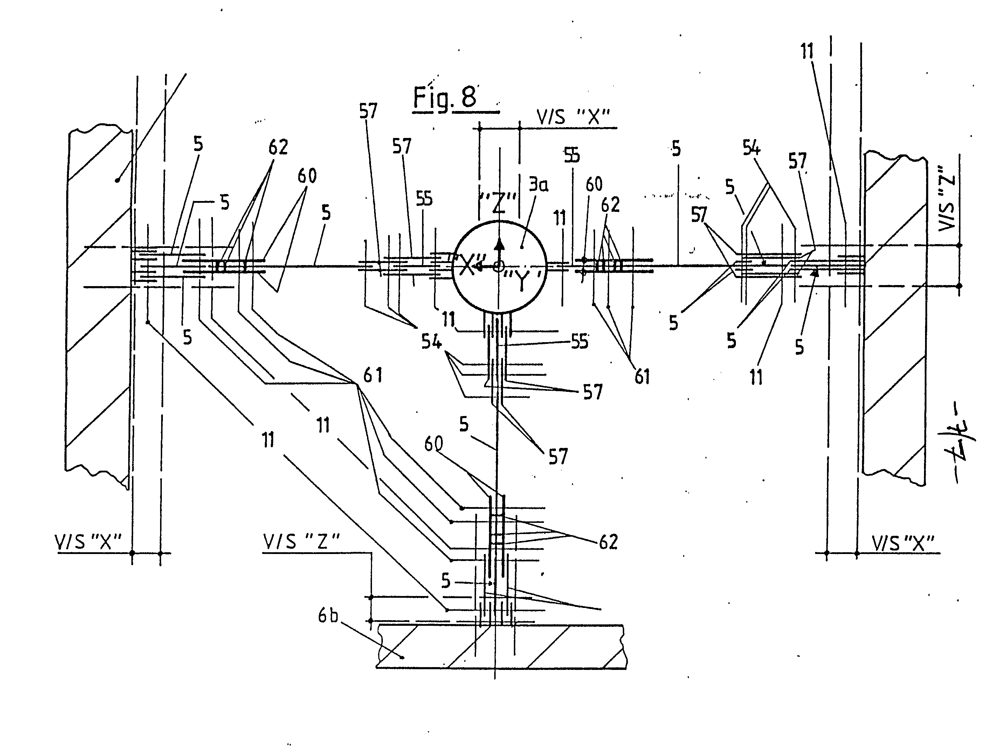

Das Ausführungsbeispiel nach den Figuren 7 und 8 unterscheidet sich von dem nach den Figuren 5 und 6 dadurch, daß anstelle der weiteren Gelenkstellen 50
und 52 starre, flächenförmige Teile angeordnet sind,
an denen die stabförmigen Lastübertragungsteile 5
in den Ecken angelenkt sind und von denen das Teil
60 aus einer Platte und das Teil 57 aus drei aneinander angelenkten Stäben besteht. Hierdurch werden
die weiteren Gelenkstellen 50 und 52 in jeweils drei
Gelenkstellen 54 bzw. 61 aufgelöst (aufgeteilt), wodurch diese Teile 57 und 60 zusätzlich zu den Lastübertragungsteilen 5 verschwenken können und damit
auch Bewegungen aufnehmen. Die äußeren oberen dreieckförmigen Teile 57 und 60 sind mit dem Gebäude durch
drei Lastübertragungsteile 5 verbunden, um eine feste
Lage dieser Teile zu erreichen. Wie aus Fig. 8 ersichtlich, sind zwei Stützvorrichtungen diametral
gegenüberliegend angeordnet, und eine dritte Stützvorrichtung zu diesen zwei ersten rechtwinklig, wobei,
wie auch bei allen anderen Ausführungsbeispielen, die
Stützvorrichtungen einschließlich ihrer Lastübertragungsteile in senkrechten Ebenen liegen, die durch
die Längsachse des Teils 3a verlaufen oder dazu parallel verschoben sind.

COHAUSZ & FLORACK    **0045391**

PATENTANWALTSBÜRO

SCHUMANNSTR. 97 · D-4000 DÜSSELDORF

Telefon: (02 11) 68 33 46          Telex: 0858 6513 cop d

PATENTANWÄLTE:

Dipl.-Ing. W. COHAUSZ  ·  Dipl.-Ing. R. KNAUF  ·  Dipl.-Ing. H. B. COHAUSZ  ·  Dipl.-Ing. D. H. WERNER

Ansprüche

1. Vorrichtung, insbesondere Tragwerk zum Halten von
   Teilen, wie Rohre, Behälter, Wände, Decken, Bühnen,
   Träger, Maschinen, Bauwerke, an Stützteilen, wie
   Bauwerken, Anlagen oder Fundamente, insbesondere
   für die ein statischer und/oder dynamischer Lastfallnachweis erforderlich ist, mit Lastübertragungsteilen, insbesondere Stäben (struts), die mit ihren
   an beiden Enden angeordneten Gelenken befestigt
   sind, wobei die Vorrichtung über äußere Stützlager
   an dem oder den Stützteil(en) und über innere Stützlager am zu haltenden Teil angelenkt ist, d a -
   d u r c h   g e k e n n z e i c h n e t ,

   daß die Lastübertragungsteile (5, 6', 55, 57, 60)
   eine geschlossene, starre, kinematische Gelenkkette
   bilden, deren Glieder räumlich angeordnet sind und
   das zu haltende Teil (3, 3a) in allen seinen Bewegungsrichtungen (Freiheitsgraden) festhalten,

   daß je zwei ein gemeinsames Gelenk (11) aufweisende
   Glieder bzw. Lastübertragungsteile mit ihren durch
   beide Gelenke verlaufenden Achsen, insbesondere mit
   ihren Längsachsen, miteinander nicht fluchten, und

   daß die zwischen den Stützlagern (A, B, A', B')

35 162 EU/USA
HC/Be

befindlichen, die äußeren und/oder inneren Stützlager tragenden Stützteile (3', 6') Glieder der
Kette bilden, wobei diese Stützteile (3', 6') die
Kette starr machen, und

daß eine Bewegung eines der Stützlager (A, B, A',
B') zu einer Bewegung mindestens eines Teiles der
Kette führt.

2. Vorrichtung nach Anspruch 1, d a d u r c h   g e -
k e n n z e i c h n e t , daß am zu haltenden
Teil (3, 3a) Kettenglieder über innere Stützlager
(A, A') angelenkt sind und das zu haltende Teil ein
Glied der Kette bildet.

3. Vorrichtung nach Anspruch 1 oder 2, d a d u r c h
g e k e n n z e i c h n e t , daß die Kette oder
Kettenteile eine Bewegung der Stützlager (A, B,
A', B') zuläßt (zulassen).

4. Vorrichtung nach einem der Ansprüche 1 bis 3,
d a d u r c h   g e k e n n z e i c h n e t , daß
die geschlossene Gelenkkette zwei oder mehr offene
Kettenteile (7) mit einem oder mehr Gliedern aufweist, wobei jedes Kettenteil das zu haltende Teil
mit einem äußeren Stützlager (B, B') verbindet
und eine Bewegungsrichtung (Freiheitsgrad) des zu
haltenden Teils (3, 3a) stoppt.

5. Vorrichtung nach Anspruch 4, d a d u r c h   g e -
k e n n z e i c h n e t , daß das Kettenteil (7)
oder das Lastübertragungsteil nicht die kürzeste Verbindung zwischen zu haltendem Teil (3, 3a) und
dem äußeren Stützteil (B, B') ist.

6. Vorrichtung nach einem der Ansprüche 1 bis 5,
d a d u r c h  g e k e n n z e i c h n e t , daß
die Gelenkkette, insbesondere die Kettenteile (7)
lang genug ist (sind), um einer größtmöglichen Bewegung eines oder mehrerer Stützlager (B, B')
folgen zu können.

7. Vorrichtung nach einem der Ansprüche 1 bis 6,
d a d u r c h  g e k e n n z e i c h n e t , daß
die Gelenkkette, insbesondere die Kettenteile (7)
so weit zusammenschiebbar bzw. verkürzbar ist
(sind), daß die größtmögliche Bewegung der Stützlager (B, B') zum zu haltenden Teil hin aufnehmbar
ist.

8. Vorrichtung nach einem der Ansprüche 1 bis 7,
d a d u r c h  g e k e n n z e i c h n e t , daß
die Lastübertragungsteile (5, 6', 55, 57, 60) mit
ihren durch beide Gelenke (11) verlaufenden Achsen,
insbesondere mit ihren Längsachsen, den Schwerpunkt
oder die Schwerachse des zu haltenden Teils (3, 3a)
nicht schneiden.

9. Vorrichtung nach einem der Ansprüche 1 bis 8,
d a d u r c h  g e k e n n z e i c h n e t , daß
die Lastübertragungsteile (5, 6', 55, 57, 60) mit
ihren durch beide Gelenke (11) verlaufenden Achsen
nicht in der Bewegungsrichtung der Stützlager (A, B, A', B') und/oder der Stützteile (3, 6')
angeordnet sind.

10. Vorrichtung nach einem der Ansprüche 1 bis 9,
    d a d u r c h   g e k e n n z e i c h n e t , daß
    die Lastübertragungsteile (5, 6', 55, 57, 60)
    nicht senkrecht oder waagerecht angeordnet sind.

11. Vorrichtung nach einem der Ansprüche 1 bis 10,
    d a d u r c h   g e k e n n z e i c h n e t ,
    daß jedes am zu haltenden Teil (3, 3a) angelenkte Lastübertragungsteil (5, 6', 55, 57, 60) nur
    eine Bewegungsrichtung (Freiheitsgrad) stoppt.

12. Vorrichtung nach einem der Ansprüche 1 bis 11,
    d a d u r c h   g e k e n n z e i c h n e t ,
    daß mindestens zwei auf einer Seite des zu haltenden Teils (3, 3a) an zwei zueinander im Abstand
    angeordneten Anlenkstellen (innere Stützlager)
    (A, A') angelenkte Lastübertragungsteile (5, 6',
    55, 57, 60) zueinander parallel sind.

13. Vorrichtung nach einem der Ansprüche 1 bis 12,
    d a d u r c h   g e k e n n z e i c h n e t ,
    daß ein Lastübertragungsteil (5, 6', 55, 57) von
    einem oder mehreren aneinander starr angelenkten
    Stäben (struts) gebildet wird.

14. Vorrichtung nach einem der Ansprüche 1 bis 12,
    d a d u r c h   g e k e n n z e i c h n e t ,
    daß ein Lastübertragungsteil (60) von einem plattenförmigen oder räumlichen Körper mit Anlenkstellen gebildet wird.

15. Vorrichtung nach einem der Ansprüche 1 bis 14,
d a d u r c h   g e k e n n z e i c h n e t ,
daß zumindest mehrere äußere Stützlager (B, B')
höher angeordnet sind als die damit verbundenen
inneren Stützlager (A, A')

16. Vorrichtung nach einem der Ansprüche 1 bis 14,
d a d u r c h   g e k e n n z e i c h n e t ,
daß zur Erzeugung von Zwängemengen die zueinander
parallelen Lastübertragungsteile (5, 5') verschieden lang sind und/oder am zu haltenden Teil (3)
an unterschiedlichen Stellen angelenkt sind, so
daß die am zu haltenden Teil angelenkten Enden
unterschiedlich große Kreisbahnen beschreiben.

17. Vorrichtung nach einem der Ansprüche 1 bis 16,
d a d u r c h   g e k e n n z e i c h n e t ,
daß zusätzlich zu den am Bauwerk oder der Anlage
und am zu stützenden Teil befestigten Gelenken mindestens ein weiteres Gelenk (50-54, 61) zwischen
den Lastübertragungsteilen (5, 55) angeordnet ist,
über das das zu haltende Teil gestützt ist und an
dem nur Lastübertragungsteile angelenkt sind.

18. Vorrichtung nach einem der Ansprüche 1 bis 17,
d a d u r c h   g e k e n n z e i c h n e t , daß
mindestens zwei Lastübertragungsteile (5) an einer
einzigen Anlenkstelle des zu haltenden Teils gelagert sind.

19. Vorrichtung nach einem der Ansprüche 1 bis 18,
d a d u r c h   g e k e n n z e i c h n e t ,

daß an dem weiteren Gelenk (50, 52, 53, 54, 61)
drei Lastübertragungsteile (5, 55, 57, 60) mit
einem Ende beweglich befestigt sind, und daß von
diesen drei Lastübertragungsteilen (5) zwei Lastübertragungsteile mit den anderen Enden am Stützteil direkt oder über Zwischenteile angelenkt
sind, und das dritte Lastübertragungsteil (5) mit
dem anderen Ende direkt oder über Zwischenteile
(5, 55, 60) an dem zu haltenden Teil (3a) angelenkt
ist.

20. Vorrichtung nach einem der Ansprüche 1 bis 18,
d a d u r c h   g e k e n n z e i c h n e t , daß
an dem weiteren Gelenk (50, 52, 53, 54, 61) drei
Lastübertragungsteile (5, 55, 57, 60) mit einem
Ende beweglich befestigt sind, daß von diesen drei
Lastübertragungsteilen (5) zwei Lastübertragungsteile mit den anderen Enden am zu haltenden Teil
(3a) direkt oder über Zwischenteile angelenkt sind
und das dritte Lastübertragungsteil mit dem anderen Ende direkt oder über Zwischenteile am Stützteil direkt oder über Zwischenteile angelenkt ist.

21. Vorrichtung nach einem der Ansprüche 1 bis 20,
d a d u r c h   g e k e n n z e i c h n e t ,
daß die Drehachsen aller Gelenke (11, 50, 52, 54,
61) der Lastübertragungsteile, die eine Bewegungsrichtung (Freiheitsgrad) stoppen, zueinander parallel sind.

22. Vorrichtung nach einem der Ansprüche 1 bis 21,
d a d u r c h   g e k e n n z e i c h n e t ,

daß am zu haltenden Teil zwei Lastübertragungsteile (55) mit ihren ersten Enden angelenkt sind,
deren gegenüberliegende Enden durch ein weiteres
Gelenk aneinander und an einem weiteren Lastübertragungsteil (5) angelenkt sind, das eine Verbindung mit dem Stützteil schafft, wobei durch Wahl
der Lage des weiteren Gelenks gegenüber den äußeren
Stützlagern der Lastübertragungsteile an dem zu
haltenden Teil die Bewegungsrichtung des Teils aufgrund seiner Wärmedehnung bestimmbar ist.

Fig. 1

Fig. 2

0045391

1/7

Fig. 3

Fig. 4

Fig. 5

Fig. 6

Fig. 7.

Fig. 8